# FASCICULE DE BREVET EUROPEEN

(11) **EP 0 938 846 B1**
(45) Date de publication et mention de la délivrance du brevet: **14.04.2004**
(21) Numéro de dépôt: 98200451.7
(22) Date de dépôt: 13.02.1998
(51) Int. Cl.: A21D 13/00, A21D 6/00, A21D 8/06

(54) **Toast garni**
Garnierte Toast
Garnished toast

(43) Date de publication de la demande: 01.09.1999
(73) Titulaire: SOCIETE DES PRODUITS NESTLE S.A., 1800 Vevey (CH)
(72) Inventeur: Tharrault Jean-François, 60001 Coincourt (FR); Popot Jacques, 60650 St-Paul (FR); Jouanneau Hervé, 60381 Songeons (FR)
(74) Mandataire: Thomas, Alain

(56) Documents cités:
- EP-A- 0 350 660
- FR-A- 2 587 595
- US-A- 3 667 963
- US-A- 3 983 256
- US-A- 5 049 398
- US-A- 5 104 669
- PATENT ABSTRACTS OF JAPAN vol. 095, no. 008, 29 septembre 1995 & JP 07 132040 A (TAKAKI BEEKARII:KK), 23 mai 1995
- PATENT ABSTRACTS OF JAPAN vol. 096, no. 004, 30 avril 1996 & JP 07 327585 A (SHIZUE ISHIDA), 19 décembre 1995

## Description

La présente invention a pour objet un toast garni et un procédé de préparation permettant de réaliser un tel toast.

Dans le domaine des produits surgelés ou des produits réfrigérés, il est connu de réaliser des tartines ou des toasts garnis qui peuvent être régénérés au four traditionnel, au grille-pain ou à la poêle.

La Société Herta a notamment mis sur le marché français, sous le nom de "Tartine d'Herta", une tartine constituée d'une tranche de pain et d'une garniture de type jambon-fromage. Cette tartine est stockée à températures réfrigérées ou au congélateur puis, au moment de sa consommation, est régénérée au four traditionnel à 220° C ou à la poêle avec un apport de matière grasse.

Par ailleurs, la demande de brevet FR 2571224 décrit un procédé de préparation d'une tartine à congeler, constituée d'une tranche de pain sur laquelle est étalée une garniture à la consistance suffisamment dense telle qu'elle ne coule pas. Cette tartine est emballée dans une poche en aluminium, soit avant soit après avoir été congelée, puis est réchauffée au four traditionnel au moment de sa consommation.

FR 2587595 est une demande de certificat d'addition à une demande de brevet (FR 8415489). Ce document décrit un produit du type tranche de pain garnie d'une préparation culinaire. La préparation culinaire en question comprend au moins une partie liquide à température ambiante et une couche de matière comestible intercalée entre la tranche de pain et la préparation alimentaire. Le rôle de cette couche de matière comestible intercalaire est d'adhérer à la tranche de pain tout en retenant la préparation culinaire déposée.
Le problème que se propose de résoudre ce document est double. Il s'agit dans un premier temps de limiter le ramollissement de la tranche de pain par imprégnation par les jus et/ou sauces contenus dans la préparation culinaire, lors de la réchauffe au four.

D'autre part, ce document se propose aussi d'améliorer l'adhérence de la garniture sur la tranche de pain. Cette garniture risque en effet de se détacher ou de glisser lors des manipulations et/ou de l'emballage. Ce document s'intéresse à des tranches de pain garnies que l'on peut conserver réfrigérées ou surgelées et que l'on réchauffe à une température adéquate pendant un temps suffisant permettant de rendre le pain croustillant.

Ainsi, le produit alimentaire selon ce document comprend une matière comestible homogène intercalée entre la tranche de pain et la préparation culinaire constituant la garniture. Cette matière comestible intercalaire est constituée d'amidon gélifié en milieu aqueux et présente une viscosité constante sur une large gamme de températures, ce qui lui évite de couler ou d'imbiber la tranche lors du chauffage.
Il est signalé que l'on peut ajouter du jaune d'oeuf et/ou du fromage au mélange matière amylacée/milieu aqueux pour modifier et moduler sa viscosité. Ce document vise à obtenir une matière intercalaire d'une viscosité précise qui permettra l'adhérence et l'obturation des trous à la surface de la tranche de pain.

De la matière grasse peut être additionnée à la matière comestible intercalaire mais elle n'en constitue qu'une très faible partie (environ 1 % du poids total de cette matière comestible).

US 5049 398 (Saari & al, 1991) décrit un produit de boulangerie (principalement pain) précuit spécialement conçu pour réchauffage au four micro-ondes en employant un matériau support suscepteur dans le but d'obtenir un produit à la mie moelleuse et la croûte croustillante.

Cependant, il n'est nullement indiqué ou évoqué la possibilité de garnir de tels pains tant entiers qu'en tranche. Le problème du relargage d'humidité depuis une garniture ne se pose pas ici, puisqu'il n'y en a pas.

Réchauffer au four traditionnel de tels produits alimentaires prend du temps. En effet, il faut préchauffer le four pendant quelques minutes, afin d'atteindre la température de chauffage souhaitée, puis il faut une quinzaine de minutes pour réchauffer le produit alimentaire de manière homogène et pour lui donner une belle couleur dorée.

Par ailleurs, en réchauffant à la poêle de tels produits alimentaires, cela prend également du temps et il faut ajouter de la matière grasse au fond de la poêle, de manière à éviter que le produit alimentaire n'attache. Aussi, le produit est inévitablement enrichi par un excés de matières grasses.

Actuellement, l'utilisation des fours à micro-ondes, notamment pour chauffer ou pour réchauffer rapidement et de manière homogène des plats préparés, est largement répandu chez les consommateurs, c'est à dire chez les particuliers et dans le domaine de la restauration.

Or, ce type de tartines ou de toasts connus ne peuvent pas être régénérés dans un four à micro-ondes. En effet, une régénération dans un four à micro-ondes de tels produits alimentaites impliquerait la formation d'une texture non homogène et caoutchouteuse de la mie de la tranche de pain et souvent une dispersion, dans la tranche de pain, de la fraction liquide de la garniture. Cette texture non homogène et caoutchouteuse proviendrait d'une migration d'une partie de la quantité d'eau contenue dans la mie de la tranche de pain vers la croûte de la tranche de pain, suivie d'un dessèchement et de la polymérisation des protéines de la farine contenue dans la tranche de pain.

La présente invention a pour but de palier à ces problèmes en proposant un toast constitué d'au moins une tranche de pain et d'une garniture, pouvant être conservé à températures réfrigérées ou au congélateur puis régénéré dans four à micro-ondes, en un temps relativement bref, de 2 à 6 min. Par ailleurs, la présente invention concerne un procédé de préparation d'un tel toast.

Le toast, selon la présente invention, congelé ou réfrigéré et constitué d'au moins une tranche de pain et d'une garniture, présente une texture moelleuse au niveau de la mie de la tranche de pain et une texture croustillante au niveau de la croûte de la tranche de pain, après régénération dans un four à micro-ondes.

On a constaté avec surprise que le toast selon l'invention présente, après régénération dans un four à micro-ondes en un temps relativement bref, une texture comparable à celle d'un produit frais du même type réchauffé au four traditionnel pendant une quinzaine de minutes.

Lors de la régénération au four à micro-ondes, on peut disposer le toast selon l'invention sur un support cartonné avec un film aluminisé, ayant l'effet d'un suscepteur, par exemple.

De préférence, le toast selon l'invention est constitué d'au moins une tranche de pain et d'une garniture entre lesquelles est répartie une couche de matière grasse. On peut utiliser comme matière grasse de la matière grasse végétale, telle que de l'huile d'olives, de l'huile de palme ou de l'huile d'arachide, ou de la matière grasse animale, comme du beurre ou du lard, par exempte.

La couche de matière grasse peut correspondre à 2-6% du poids final du toast, par exemple. Si la couche de matière grasse correspond à une valeur inférieure à 2% du poids final du toast, elle n'est pas en quantité suffisante pour couvrir l'intégralité de la tranche de pain. Par contre, si elle correspond à une valeur supérieure à 6% du poids final du toast, on obtient un toast ayant une teneur en matière grasse trop importante, dans lequel la matière grasse pénètre dans toute l'épaisseur de la tranche de pain.
De préférence, elle correspond à 3-4% du poids final du toast.
La couche de matière grasse répartie entre la tranche de pain et la garniture joue deux rôles; d'une part elle permet d'éviter la migration de l'eau entre la garniture et la tranche de pain et d'autre part elle absorbe les micro-ondes, en permettant ainsi, à des températures élevées, de faire fondre les cristaux de glace contenu dans le toast, s'il a été congelé, et de développer une texture moelleuse au niveau de la mie de pain et une texture croustillante au niveau de la croûte de la tranche de pain.

Le toast selon la présente invention peut être constitué d'au moins une tranche de pain provenant d'un pain réalisé à partir d'une pâte à base de 55-65% de farine, 1-3% de sucre, 1-3% de protéines ajoutées, 0,1-1% d'émulsifiant, 0,5-2% de levure, 0,5-1,5% de sel, 1-5% de matière grasse et 28-40% d'eau, par exemple.

La farine peut être de la farine de blé tendre à 10% de protéines et 0,55% de cendres, par exemple. On peut également utiliser un mélange de farines à base de 70-90% de farine de blé tendre et 10-30% de farine de seigle, de farine de maïs et/ou de farine de blé dur, par exemple.
On peut traiter enzymatiquement la farine avec des enzymes du type amylase et/ou pentosanase pour améliorer, lors de la régénération au four à micro-ondes du toast selon l'invention, la texture moelleuse de la mie de la tranche de pain, la coloration de la croûte de la tranche de pain ainsi que le volume du toast.

Le sucre peut être sous forme cristalline ou sous forme de sirop, par exemple. Il joue un rôle de substrat lors de la fermentation et contribue également à la coloration de la tranche de pain lors de la cuisson.

Les protéines ajoutées peuvent être des protéines du lait ou des protéines de blancs d'oeufs, par exemple. Elles ont pour rôle principal de stabiliser la rétention du gaz développé dans la pâte, lors de sa fermentation, permettant ainsi d'améliorer le volume final du pain et de favoriser la coloration de la croûte.

L'émulsifiant peut être de la lécithine, du DATEM, c'est à dire du diacétyl tartarique ester de monoglycérides et/ou du SSL, c'est à dire du sodium stearyl lactilate, par exemple.

La levure peut être de la levure boulangère, déshydratée ou non, ou de la levure chimique, par exemple.
On peut également ajouter en plus de la levure désactivée, de manière à affaiblir le réseau du gluten et réduire sa polymerisation lors de la réchauffe dans un four à micro-ondes, par exemple.

La matière grasse peut être sous forme de graisse, de poudre ou d'huile, par exemple. Elle permet d'améliorer la texture moelleuse de la mie de la tranche de pain.

Le pain, réalisé à partir d'une pâte à base de farine, de sucre, de protéines ajoutées, d'émulsifiant, de levure, de sel, de matière grasse et d'eau est donc fabriqué selon un procédé traditionnel, avec pétrissage en batch ou en continu, pointage, façonnage et portionnement suivi d'une étape de pousse dans une chambre à 30-36°C, pendant 30-90 min, selon la taille du pain. De préférence on fabrique des pains de 500 g à 2kg, de manière à pouvoir, ensuite, couper des tranches de pain régulières et diminuer également les chutes à la découpe.
On peut réaliser l'étape de pousse ainsi que l'étape de cuisson sur plaques, sur bande ou dans des moules, par exemple.

Afin d'obtenir un pain avec une croûte régulière et croustillante, on peut effectuer une étape de vaporisation, c'est à dire d'injection de vapeur, de 1-2 min à 210-230° C, au début de l'étape de cuisson, par exemple. On peut cuire le pain à 210-230° C pendant 40-60 min. Lors de la cuisson on veille à ce que la perte d'eau soit de 17-22% et de préférence de 18-19%.

Après l'étape de cuisson, on laisse refroidir le pain, puis on le laisse reposer à 4-10° C pendant 1-7 jours, de préférence 4-6 jours, de manière à ce qu'il s'établisse un équilibre entre la teneur en eau de la mie et celle de la croûte du pain et que l'on puisse ainsi mieux couper en tranches le pain.

De préférence la teneur en eau au niveau de la croûte de la tranche de pain est de 4-7%, avant cette étape de repos, et de 15-23%, après cette étape de repos.
De préférence la teneur en eau au niveau de la mie de la tranche de pain est de 31-40%, avant cette étape de repos, et de 20-30%, après cette étape de repos.

On peut ensuite couper le pain en tranches ayant une épaisseur de 10-20 mm, par exemple. De préférence, on coupe des tranches de 14-16 mm.

La présente invention a également pour objet un procédé de préparation d'un toast, selon l'invention, dans lequel, on grille la surface de la tranche de pain ainsi réalisée, on répartit dessus une couche de matière grasse, puis on dépose une garniture sur la tranche de pain, de manière à obtenir un toast que l'on conditionne dans un emballage en plastique ou dans un emballage cartonné, avant de le stocker à températures réfrigérées ou au congélateur.

On grille la ou les faces de la tranche de pain ainsi réalisée, de manière à obtenir ensuite la croustillance aux micro-ondes. Lors de cette étape de pré-toastage, on peut réduire la teneur en eau de la tranche de pain, de manière à avoir une perte en poids de 4-6%, par exemple.
On peut effectuer cette étape de pré-toastage en un passage de la tranche de pain pour une durée de 10 à 25 secondes, de préférence 20 secondes, sous des rampes à infrarouges, par exemple. La tranche peut être grillée sur une des deux faces ou sur les deux faces.

On répartit ensuite une couche de matière grasse sur la tranche de pain. Comme cela a été précisé précédemment cette couche de matière grasse peut être de la graisse végétale ou de la graisse animale, par exemple.
La propriété de couche barrière de la matière grasse, décrite précédemment, c'est à dire de protection contre l'humidité, peut être augmentée avec l'incorporation dans la couche de matière grasse d'une protéine filmogène, tel que du caséinate de calcium et d'un hydrocolloïde, tel qu'un carraghénate du type iota, par exemple.

On dépose ensuite de la garniture sur la tranche de pain, de manière à obtenir un toast garni. La garniture peut avoir une teneur en eau de 40-80%, par exemple. De préférence, on dépose une proportion de garniture de 50-75% par rapport au poids final du toast.

La garniture peut être une garniture salée ou une garniture sucrée.

Si l'on souhaite réaliser un toast salé, on peut déposer sur le toast une garniture salée, comprenant des morceaux de viande ou de poisson, des oeufs, une sauce, des légumes entiers et/ou en morceaux, du fromage, des épices et/ou des céréales, par exemple.

La viande peut être du boeuf, du poulet, de la dinde, du veau, du porc ou des produits de charcuterie, comme du jambon, de la saucisse ou du salami, par exemple.

Le poisson peut être du cabillaud, du saumon, de la sole ou du colin, par exemple. On peut ajouter les morceaux de viande ou de poisson précuits ou à l'état cru, par exemple. On peut également ajouter la viande ou le poisson haché dans la sauce, par exemple.

Les oeufs peuvent être des oeufs durs ou brouillés, par exemple.

Les légumes entiers peuvent être des graines de maïs, des petits pois ou des haricots, par exemple. Les légumes en morceaux peuvent être des tomates, des poivrons, des champignons, des pommes de terre, des oignons, du céleri, des carottes ou des broccolis, par exemple.
On peut blanchir ou précuire les légumes entiers et/ou en morceaux avant de les ajouter à la pâte, par exemple. On peut également les ajouter sous forme de purée, par exemple.

Le fromage peut être du gruyère, de la mozzarella, du cheddar ou de l'emmental, par exemple.

La sauce peut être de la moutarde, du ketchup, de la sauce tomate ou une sauce blanche, par exemple.

Les céréales peuvent être du riz ou de l'orge perlé que l'on peut précuire ou du sésame ou du pavot, par exemple.

Les épices peuvent être du poivre, du romarin, de là sauge, du gingembre, du thym, du piment ou du cumin, par exemple.

Si l'on souhaite réaliser un toast sucré, on peut déposer sur le toast une garniture comprenant des fruits entiers et/ou en morceaux, en purée, en confiture, des oeufs, une sauce, des épices et/ou des céréales, par exemple.

Les fruits entiers peuvent être des fraises, des framboises, des myrtilles, des cerises, des groseilles ou des mûres, par exemple. Les fruits en morceaux peuvent être des pommes, des poires, des ananas ou des abricots, par exemple.

La sauce peut être une sauce à la vanille, une sauce au caramel ou une sauce au chocolat, par exemple.

Les épices peuvent être de la cannelle ou de la vanille, par exemple.

Les céréales peuvent être du riz ou de l'orge perlé que l'on peut précuire, par exemple.

On peut, après avoir déposé la garniture sur la première tranche de pain, superposer une seconde tranche de pain, préalablement grillée et sur laquelle on a ensuite réparti une couche de matière grasse, par exemple. On appliquera au contact de la garniture la face de la seconde tranche sur laquelle on a réparti une couche de matière grasse.

On conditionne alors le toast ainsi réalisé dans un emballage en plastique ou dans un emballage cartonné, avant de le stocker à températures réfrigérées ou au congélateur.

Avant de conditionner le toast et de le stocker à températures réfrigérées ou au congélateur, on peut lui faire subir une étape de cuisson pendant 5-10 min à 160-200° C, par exemple.

Si on stocke le toast au congélateur, on peut le congeler avant de le conditionner, par exemple.

On peut disposer le toast ainsi réalisé, avant de le conditionner, sur un support cartonné avec un film aluminisé, ayant les effets d'un suscepteur lors du chauffage ou de la réchauffe dans un four à micro-ondes, par exemple.

Pour aider l'évacuation de l'humidité, on peut également placer le toast selon l'invention sur du papier absorbant, pour le chauffer dans un four à micro-ondes, par exemple.

Lors du chauffage dans un four à micro-ondes, la croûte de la tranche de pain se dessèche très vite à une humidité inférieure à 2%. Ce qui permet donc d'obtenir la texture croustillante souhaitée au niveau de la croûte. Par contre, la mie de la tranche de pain est alors imbibée par la couche de matière grasse, ce qui la rendra moelleuse.

La présente invention est décrite plus en détail à l'aide des exemples ci-après. Dans ces exemples, les pourcentages sont donnés en poids, sauf indication contraire.

### Exemple 1

On prépare des toasts pour lesquels la garniture est de type pizza.

Pour ce faire, on prépare tout d'abord une pâte à pain contenant 1,75 kg de farine de blé tendre, 0,02 kg de sucre cristallisé, 0,04 kg de protéines de lait, 0,03 kg de sel, 7 g d'émulsifiant, du SSL, 0,06 kg de levure boulangère fraiche, 0,06 kg d'huile de tournesol et 1,03 kg d'eau.

On pétrit en batch cette pâte, on effectue un pointage, on la façonne et on la portionne en pâtons de 1 kg, avant de la laisser en chambre de pousse à 34° C pendant 45 min. On cuit alors les pâtons pendant 50 min à 220° C, de manière à obtenir des pains dorés. On veille à ce que la perte en eau de ces pains, lors de la cuisson, soit de 18%.

Après l'étape de cuisson, on laisse refroidir les pains, puis on les laisse rassir pendant 5 jours, de manière à ce qu'il s'établisse un équilibre entre la teneur en eau de la mie et celle de la croûte des pains. On peut ainsi mieux couper en tranches les pains, par exemple.

On coupe les pains en tranches à une épaisseur de 15 mm.

On grille une face des tranches de pain ainsi coupées en un passage de 20 secondes sous des rampes à infrarouges, de manière à obtenir ensuite la croustillance aux micro-ondes. Lors de cette étape de pré-toastage, on réduit la teneur en eau des tranches de pain, de manière à avoir une perte en poids de 5%.

On répartit ensuite une couche d'un mélange contenant 3% d'huile d'olive, 0,5% de caséinate de calcium et 0,5 % de carraghénate du type iota, par rapport au poids final du toast, sur les tranches de pain.

On prépare alors une garniture de type pizza, contenant 80% d'oignons en morceaux, 5% d'huile d'olive vierge, 2,5% d'ail en poudre, 8,2% de concentré de tomate, 0,8% de sel fin, 0,1% de poivre blanc, 0,1% de piment de cayenne en poudre et 2% de basilic lyophilisé.

On dépose donc ensuite la garniture de type pizza sur les tranches de pain, dans une proportion de 60% par rapport au poids final du toast. La garniture a une teneur en eau de 70%.

On conditionne alors les toasts ainsi réalisés, que l'on a disposer sur un support cartonné avec un film aluminisé, dans des emballages en carton, avant de les stocker au congélateur.

Le consommateur régénère alors les toasts ainsi réalisés dans un four à micro-ondes pendant 2 min, pour une puissance de 900 watt, de manière à le chauffer et à donner une texture moelleuse à la mie de la tranche de pain et une texture croustillante à la croûte de la tranche de pain.

### Exemple 2

On prépare des toasts ayant une garniture aux oeufs brouillés et aux lardons.

Pour ce faire, on prépare des tranches de pain grillées et sur lesquelles on a réparti une couche d'un mélange contenant 3% d'huile de tournesol, 0,5% de caséinate de calcium et 0,5 % de carraghénate du type iota, par rapport au poids final du toast, de la manière telle que décrite à l'exemple 1.

On prépare alors une garniture aux oeufs brouillés et aux lardons, contenant 35% de sauce béchamel, 41% d'oeufs brouillés, 17% de lardons et 7% d'un mélange d'épices.

On dépose donc ensuite la garniture de type pizza sur les tranches de pain, dans une proportion de 63% par rapport au poids final du toast. La garniture a une teneur en eau de 60%.

On conditionne alors les toasts ainsi réalisés, que l'on a disposer sur un support cartonné avec un film aluminisé, dans des emballages en carton, avant de les stocker au congélateur.

Le consommateur régénère alors les toasts ainsi réalisés dans un four à micro-ondes pendant 3 min à 900 watt, de manière à le chauffer et à donner une texture moelleuse à la mie de la tranche de pain et une texture croustillante à la croûte de la tranche de pain.

### Exemple 3

On prépare des toasts ayant une garniture chocolatée.

Pour ce faire, on prépare tout d'abord 3 kg de pâte à pain contenant 1,9 kg de farine de blé tendre, 0,06 kg de sucre cristallisé, 0,06 kg de protéines de lait, 0,03 kg de sel, 0,01 kg démulsifiant, du SSL, 0,06 kg de levure boulangère fraiche, 0,06 kg d'huile de tournesol et 0,82 kg d'eau.

On pétrit en batch cette pâte, on effectue un pointage, on la façonne et on la portionne en pâtons de 1,5 kg, que l'on laisse en chambre de pousse à 32° C pendant 45 min. On cuit alors les pâtons pendant 50 min à 190° C, de manière à obtenir des pains dorés. On veille à ce que la perte en eau de ces pains soit de 19%.

Après l'étape de cuisson, on laisse refroidir les pains, puis on les laisse rassir pendant 6 jours, de manière à ce qu'il s'établisse un équilibre entre la teneur en eau de la mie et celle de la croûte du pain. On peut ainsi mieux couper en tranches les pains.

On coupe les pains en tranches à une épaisseur de 13 mm.

On grille une face des tranches de pain ainsi coupées en un passage de 22 secondes sous des rampes à infrarouges, de manière à obtenir ensuite la croustillance aux micro-ondes. Lors de cette étape de pré-toastage, on réduit la teneur en eau des tranches de pain, de manière à avoir une perte en poids de 5%.

On répartit ensuite une couche d'un mélange contenant 3% de beurre, 0,5% de caséinate de calcium et 0,5 % de carraghénate du type iota, par rapport au poids final du toast, sur les tranches de pain.

On prépare alors une garniture chocolatée, contenant 20% de lait en poudre, 40% de poudre de cacao, 2% de jaune d'oeuf et 38% de crème à 45% de matière grasse.

On dépose donc ensuite la garniture chocolatée sur les tranches de pain, dans une proportion de 57% par rapport au poids final du toast. La garniture a une teneur en eau de 55%.

On conditionne alors les toasts ainsi réalisés, que l'on a disposer sur un support cartonné avec un film aluminisé, dans des emballages en carton, avant de les stocker au congélateur.

Le consommateur régénère alors les toasts ainsi réalisés dans un four à micro-ondes pendant 3 min à 900 watt, de manière à le chauffer et à donner une texture moelleuse à la mie de la tranche de pain et une texture croustillante à la croûte de la tranche de pain.

## Revendications

1. Toast, congelé ou réfrigéré, constitué d'au moins une tranche de pain, comprenant une portion de mie entourée de croûte, et une garniture, **caractérisé par le fait qu'**il est constitué d'au moins une tranche de pain et d'une garniture entre lesquelles est répartie une couche de matière grasse, que la tranche de pain est grillée sur une des deux faces ou sur les deux faces, que la teneur en eau au niveau de la croûte de la tranche de pain est de 15-23% et que la teneur en eau au niveau de la mie de la tranche de pain est de 20-30% et qu'il présente, après régénération au four micro-ondes, une texture moelleuse au niveau de la mie de la tranche de pain et une texture croustillante au niveau de la croûte de la tranche de pain.

2. Toast selon la revendication 1, **caractérisé par le fait que** la tranche de pain provient d'un pain réalisé à partir d'une pâte à base de 55-65% de farine, 0,5-3% de sucre, 1-3% de protéines ajoutées, 0,1-1% d'émulsifiant, 0,5-2% de levure, 0,5-1,5% de sel, 1-5% de matière grasse et 25-40% d'eau.

3. Toast selon les revendications 1 et 2, **caractérisé par** l'incorporation dans la couche de matière grasse d'une protéine filmogène et d'un hydrocolloïde.

4. Toast selon les revendications 1 à 3, pour lequel la couche de matière grasse correspond à 2-6% du poids final du toast et la garniture 50-75% du poids final du toast.

5. Toast selon la revendication 3, **caractérisé en ce que** la protéine filmogène est du caséinate de calcium et l'hydrocolloïde est un carraghenate de type iota.

6. Procédé de préparation d'un toast selon l'une des revendications 1 à 5, dans lequel :
- on cuit le pain, de manière à ce qu'il ait une perte en eau de 17-22%,
- on le laisse reposer à 4-10°C pendant 1-7 jours, avant de le couper en tranches de pain, de manière à ce que la teneur en eau au niveau de la croûte de la tranche de pain est de 15-23% et que la teneur en eau au niveau de la mie de la tranche de pain est de 20-30%,
- on grille une de ces tranches de pain,
- on répartit la couche de matière grasse sur la tranche de pain grillée,
- on dépose la garniture sur la tranche de pain grillée, de manière à obtenir un toast,
- puis on conditionne le toast ainsi réalisé dans un emballage en plastique ou dans un emballage cartonné, avant de le stocker à des températures réfrigérées ou de le congeler.

7. Procédé selon la revendication 6, dans lequel on congèle avant d'avoir conditionné le toast.

8. Procédé selon les revendications 6 et 7, dans lequel, après avoir déposé la garniture sur la première tranche de pain, on superpose une seconde tranche de pain grillée, en mettant en contact de la garniture la face de cette seconde tranche de pain sur laquelle on a, au préalable, réparti une couche de matière grasse.

9. Procédé selon les revendications 6 à 8, dans lequel on dispose le toast ainsi réalisé, avant de le conditionner, sur un support cartonné avec un film aluminé, ayant les effets d'un suscepteur lors de la réchauffe aux micro-ondes.

## Claims

1. Toast, frozen or refrigerated, composed of at least one slice of bread, comprising a crumb portion surrounded by crust, and a garnish, **characterised in that** it is composed of at least one slice of bread and of a garnish between which there is spread a layer of fat, **in that** the slice of bread has been toasted on one of its two sides or on both sides, **in that** the water content in the crust of the slice of bread is from 15 to 23 % and the water content in the crumb of the slice of bread is from 20 to 30 %, and **in that**, after regeneration in a microwave oven, it has a soft texture in the crumb of the slice of bread and a crusty texture in the crust of the slice of bread.

2. Toast according to claim 1, **characterised in that** the slice of bread comes from a loaf produced from a dough based on from 55 to 65 % flour, from 0.5 to 3 % sugar, from 1 to 3 % added proteins, from 0.1 to 1 % emulsifier, from 0.5 to 2 % yeast, from 0.5 to 1.5 % salt, from 1 to 5 % fat and from 25 to 40 % water.

3. Toast according to claims 1 and 2, **characterised by** the incorporation of a film-forming protein and of a hydrocolloid into the layer of fat.

4. Toast according to claims 1 to 3, wherein the layer of fat corresponds to from 2 to 6 % of the final weight of the toast and the garnish corresponds to from 50 to 75 % of the final weight of the toast.

5. Toast according to claim 3, **characterised in that** the film-forming protein is calcium caseinate and the hydrocolloid is a carragheenate of the iota type.

6. Process for the preparation of a toast according to any one of claims 1 to 5, in which:
- the loaf is baked in such a manner that it undergoes a water loss of from 17 to 22 %,
- the loaf is allowed to rest at from 4 to 10°C for from 1 to 7 days before being cut into slices of bread, so that the water content in the crust of the slice of bread is from 15 to 23 % and the water content in the crumb of the slice of bread is from 20 to 30 %,
- one of the slices of bread is toasted,
- the layer of fat is spread over the toasted slice of bread,
- the garnish is placed on the toasted slice of bread so as to obtain a toast,
- the toast so produced is then packed in a plastics packaging or in a cardboard packaging before being stored at refrigerated temperatures or before being frozen.

7. Process according to claim 6, wherein the toast is frozen before being packaged.

8. Process according to claims 6 and 7, wherein, after the garnish has been placed on the first slice of bread, a second toasted slice of bread is superposed by bringing into contact with the garnish the side of the second slice of bread that has been spread beforehand with a layer of fat.

9. Process according to claims 6 to 8, wherein the toast so produced, before being packaged, is placed on a cardboard support provided with an aluminised film, having the effect of a susceptor during reheating by means of microwaves.

## Patentansprüche

1. Tiefgefrorener oder gekühlter Toast, der aus mindestens einer Brotscheibe, die eine von Kruste umgebene Krume umfaßt, und aus einem Belag besteht, **dadurch gekennzeichnet, daß** er aus mindestens einer Brotscheibe und aus einem Belag besteht, zwischen denen eine Fettschicht verteilt ist, daß die Brotscheibe auf einer der beiden Seiten oder auf beiden Seiten getoastet ist, daß der Wassergehalt im Bereich der Kruste der Brotscheibe 15-23% beträgt und daß der Wassergehalt im Bereich der Krume der Brotscheibe 20-30% beträgt und daß er nach Regenerierung im Mikrowellenofen im Bereich der Krume der Brotscheibe eine weiche Textur und im Bereich der Kruste der Brotscheibe eine knusprige Textur aufweist.

2. Toast nach Anspruch 1, **dadurch gekennzeichnet, daß** die Brotscheibe von Brot stammt, das aus einem Teig auf der Grundlage von 55-65% Mehl, 0,5-3% Zucker, 1-3% zugesetzten Proteinen, 0,1-1% Emulgator, 0,5-2% Hefe, 0,5-1,5% Salz, 1-5% Fett und 25-40% Wasser hergestellt ist.

3. Toast nach den Ansprüchen 1 und 2, **gekennzeichnet durch** die Einarbeitung eines filmbildenden Proteins und eines Hydrocolloids in die Fettschicht.

4. Toast nach den Ansprüchen 1 bis 3, bei dem die Fettschicht 2-6% des Endgewichts des Toasts und der Belag 50-75% des Endgewichts des Toasts entspricht.

5. Toast nach Anspruch 3, **dadurch gekennzeichnet, daß** das filmbildende Protein Calciumcaseinat und das Hydrocolloid ein iota-Carrageenat ist.

6. Verfahren zur Herstellung eines Toasts nach einem der Ansprüche 1 bis 5, bei dem man:
- das Brot so bäckt, daß es einen Wasserverlust von 17-22% hat,
- es 1-7 Tage bei 4-10°C, bevor es in Brotscheiben geschnitten wird, so ruhen läßt, daß der Wassergehalt im Bereich der Kruste der Brotscheibe 15-23% beträgt und der Wassergehalt im Bereich der Krume der Brotscheibe 20-30% beträgt,
- eine dieser Brotscheiben toastet,
- die Fettschicht auf der getoasteten Brotscheibe verteilt,
- auf die getoastete Brotscheibe den Belag auflegt, so daß man einen Toast erhält,
- dann den auf diese Weise hergestellten Toast in einer Kunststoffverpackung oder in einer Kartonverpackung verpackt, bevor er bei Kühltemperaturen gelagert oder tiefgefroren wird.

7. Verfahren nach Anspruch 6, bei dem man den Toast vor dem Verpacken tiefgefriert.

8. Verfahren nach den Ansprüchen 6 und 7, bei dem nach dem Auflegen des Belags auf der ersten Brotscheibe eine zwei getoastete Brotscheibe darauflegt, indem man die Seite dieser zweiten Brotscheibe, auf der zuvor eine Fettschicht aufgetragen wurde, mit dem Belag in Kontakt bringt.

9. Verfahren nach den Ansprüchen 6 bis 8, bei dem man den auf diese Weise hergestellten Toast vor dem Verpacken auf einem Kartonträger mit einer aluminierten Folie auflegt, der bei der Erhitzung mit Mikrowellen als Suszeptor wirkt.
